# EUROPEAN PATENT APPLICATION

(11) **EP 1 318 511 A1**
(43) Date of publication of application: **11.06.2003**
(21) Application number: 02026810.8
(22) Date of filing: 28.11.2002
(51) Int. Cl.: G11B 7/24

(54) **Optical information recording medium**

(30) Priority: 30.11.2001 JP 2001366189
(71) Applicant: FUJI PHOTO FILM CO., LTD., Kanagawa-ken (JP)
(72) Inventor: Toshio, Ishida, Fuji Photo Film Co., Ldt., Odawara-shi, Kanagawa (JP); Takeshi, Kakuta, Fuji Photo Film Co., Ldt., Odawara-shi, Kanagawa (JP); Shinji, Saito, Fuji Photo Film Co., Ldt., Odawara-shi, Kanagawa (JP)
(74) Representative: Klunker . Schmitt-Nilson . Hirsch

(57) **Abstract**

An optical information recording medium including a substrate having succesively disposed thereon a recording layer and a cover layer, wherein information is recorded and reproduced by irradiating a laser beam having a wavelength of 380 to 500 nm through a lens having a numerical aperture NA of at least 0.7 and the recording layer contains an organic substance and has an attenuation coefficient k of more than 0.3.

## Description

### BACKGROUND OF THE INVENTION

### Field of the Invention

The present invention relates to an optical information recording medium, and specifically to an optical information recording medium that is writable by heat mode.

### Description of the Related Art

Heretofore, an optical information recording medium (optical disc) on which information can be written only once with laser light has been known. This optical disc is also referred to as a writable CD (so-called CD-R), and a typical structure of this CD-R comprises a transparent disc substrate having successively disposed thereon a recording layer including an organic dye, a light-reflective layer including a metal such as gold, and a protective layer (cover layer) made of a resin. Information is recorded on this CD-R by irradiating the CD-R with near-infrared laser light (usually a laser beam having a wavelength around 780 nm). Specifically, the portion of the recording layer that is irradiated absorbs light, whereby the temperature rises locally at the irradiated portion. The rise in temperature produces a physical or chemical change (e.g., formation of pits) to alter the optical properties of the irradiated portion, whereby information is recorded. The information thus recorded on the CD-R is ordinarily reproduced by irradiating the CD-R with a laser beam having the same wavelength as that of the laser beam used to record the information and detecting a difference in reflectance between the region of the recording layer whose optical properties have been changed (recorded portion) and the region of the recording layer whose optical properties have not been changed (unrecorded portion).

In recent years, there has been a demand for optical information recording media having a higher recording density, and writable digital versatile discs (so-called DVD-R) have been proposed in response to this demand (*Nikkei New Media,* extra issue entitled "DVD" (1995)). This DVD-R typically comprises two transparent disc substrates that each have successively disposed thereon a recording layer containing an organic dye, a light-reflective layer, and a protective layer, with the discs being adhered to each other so that the recording layers face inward or so that protective substrates having the same disc shape as these discs are disposed on outer sides of the adhered discs. Moreover, the transparent disc substrate includes a guide groove (pre-groove) used for tracking a laser irradiated thereon, with the groove having a narrow track pitch (0.74 to 0.8 µm) that is no more than half of that in a CD-R. Information is recorded and reproduced (played back) by irradiating the DVD-R with laser light in a visible region (usually a laser beam having a wavelength region ranging from 630 to 680 nm), whereby information can be recorded at a higher density than a CD-R.

Recently, networks such as the Internet and high-vision television are rapidly becoming more widespread. In addition, the start of HDTV (High Definition Television) broadcasting is near at hand. As a result, large-capacity optical recording media capable of recording visual information easily and inexpensively are in demand. While DVD-Rs currently play a significant role as large-capacity recording media, the demand for media having greater recording capacity and higher density continues to escalate, and development of recording media that can correspond to this demand is also needed. For this reason, development of recording media having even greater storage capacity with which high-density recording can be performed with light, which has a wavelength even shorter than that of DVD-R, continues to advance.

For example, methods for recording information on and reproducing information from an optical information recording medium, which includes a recording layer containing an organic dye, by irradiating the medium, from the recording layer side thereof towards a light-reflective layer side thereof, with a laser beam having a wavelength of 530 nm or less, are disclosed in, for example, Japanese Patent Application Laid-Open (JP-A) Nos. 4-74690, 7-304256, 7-304257, 8-127174, 11-53758, 11-334204, 11-334205, 11-334206, 11-334207, 2000-43423, 2000-108513, 2000-113504, 2000-149320, 2000-158818 and 2000-228028. In these methods, information is recorded on and reproduced from an optical disc having a recording layer containing a porphyrin compound, an azo-based dye, a metal azo-based dye, a quinophthalone-based dye, a trimethine cyanine dye, a dicyanovinylphenyl-skeleton dye, a coumarin compound, a naphthalocyanine compound or the like, by irradiating the optical disc with a blue laser (having a wavelength of 430 or 488 nm) or a blue-green laser (having a wavelength of 515 nm).

A phase change optical disc is also known as a type of DVD, and includes a layer containing an alloy, such as GeSbTe, as a recording layer. Information is recorded on and reproduced from this optical disc by using a laser beam to cause an instant temperature rise and thereby induce a phase change from a crystalline state to an amorphous state, and then utilizing a change in reflectance caused by the phase change. Recently, a DVR system utilizing the phase change DVD has been made in public ("ISOM2000", p. 210 to 211). Information is recorded and reproduced with this system using a blue-violet laser light. This system has achieved some progress in the pursuit of higher density.

Lately, DVR systems including the recording layer containing an organic substance have been proposed. Such DVR systems have a different construction from those of the conventional DVD-R and CD-R, and a recent study has revealed that the DVR systems, including the recording layer having a usual attenuation coefficient, exhibit low degree of modulation and thus are insufficient in sensitivity.

### SUMMARY OF THE INVENTION

The present invention has been accomplished in view of the above-described problems of the prior art. That is, an object of the invention is to provide an optical information recording medium that has a high degree of modulation and exhibits stable recording and reproducing characteristics.

The invention is an optical information recording medium comprising a substrate having succesively disposed thereon a recording layer and a cover layer, wherein information is recorded and reproduced by irradiating a laser beam having a wavelength of 380 to 500 nm through a lens having a numerical aperture NA of at least 0.7 and the recording layer contains an organic substance and has an attenuation coefficient k of more than 0.3.

The attenuation coefficient k is preferably 0.3 < k < 0.8, and more preferably 0.3 < k < 0.7.

### DESCRIPTION OF THE PREFERRED EMBODIMENTS

Embodiments of an optical information recording medium according to the invention will be described below. The optical information recording medium according to the invention comprises a substrate having succesively disposed thereon a recording layer and a cover layer, wherein information is recorded and reproduced by irradiating a laser beam having a wavelength of 380 to 500 nm through a lens having a numerical aperture NA of at least 0.7, and the recording layer contains an organic substance and has an attenuation coefficient k of more than 0.3. The respective layers in the optical information recording medium, having a light-reflective layer between the substrate and the recording layer, are detailed below.

### Substrate

Materials conventionally used for optical information recording media substrates can be arbitrarily selected and used as the material for the substrate of the invention.

Specific examples of such substrate materials include glass, polycarbonate, acrylic resins such as polymethyl methacrylate, vinyl chloride-type resins such as polyvinyl chloride and copolymers of vinyl chloride, epoxy resins, amorphous polyolefins, polyesters and metals such as aluminum. If necessary, these materials may be used in combination.

Among the materials listed above, polycarbonate and amorphous polyolefins are more preferable from the standpoints of moisture resistance, dimension stability and low cost. Polycarbonate is particularly preferable. The thickness of the substrate is preferably 0.5 to 1.4 mm.

A guide groove for tracking or a pre-groove representing information such as address signals is formed on the substrate. In order to achieve higher storage density, it is preferable to use a substrate having a pre-groove with a track pitch that is narrower than the track pitch in a conventional CD-R or DVD-R. It is essential that the track pitch of the pre-groove is 300 to 600 nm. It is also essential that the depth of the pre-groove (groove depth) is 40 to 150 nm.

An undercoat layer is preferably disposed on the surface of the substrate at the side disposed with the light-reflective layer, in order to improve flatness and enhance adhesion.

Examples of material for the undercoat layer include polymeric substances such as polymethyl methacrylate, acrylic acid/methacrylic acid copolymers, styrene/maleic anhydride copolymers, polyvinyl alcohol, N-methylolacrylamide, styrene/vinyltoluene copolymers, chlorosulfonated polyethylene, nitrocellulose, polyvinyl chloride, chlorinated polyolefin, polyester, polyimide, vinyl acetate/vinyl chloride copolymers, ethylene/vinyl acetate copolymers, polyethylene, polypropylene, polycarbonate and the like; and surface-modifying agents such as silane coupling agents.

The undercoat layer can be formed by preparing a coating liquid by dissolving or dispersing the above-mentioned material in a suitable solvent, and applying the coating liquid to the substrate surface by spin coating, dip coating, extrusion coating, or the like. The thickness of the undercoat layer is normally 0.005 to 20 µm, and preferably 0.01 to 10 µm.

### Light-reflective Layer

A material having a high reflectance with respect to lasers is used for the light-reflective layer. It is preferable that the reflectance is 70% or more.

Examples of the light-reflective material having the high reflectance include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, and stainless steel. These light-reflective materials may be used singly or in combination of two or more, or alternatively as alloys. Among these materials, Cr, Ni, Pt, Cu, Ag, Au and Al, and stainless steel are preferable. Au, Ag, Al and the alloys containing Au and Ag as the main component are preferable. Au, Ag and their alloys are most preferable.

The light-reflective layer can be formed by, for example, vacuum-depositing, sputtering or ion-plating the light-reflective material on the substrate. The thickness of the light-reflective layer is preferably 10 to 300 nm, and more preferably 50 to 200 nm.

The light-reflective layer is not always necessary in the case where the recording layer described below has a sufficiently large reflectance.

### Recording Layer

The recording layer is formed on the light-reflective layer. The recording layer is a layer that contains an organic substance and has an attenuation coefficient k of more than 0.3. Information can be recorded on the recording layer by a laser beam having a wavelength of 380 to 500 nm through a lens having a numerical aperture NA of at least 0.7.
Since the recording layer has the attenuation coefficient k of more than 0.3, the amplitude of degree of modulation can be made large when information is recorded on the layer.

Measurement of the attenuation coefficient k can be carried out in the following manner. A solution of the organic substance is placed on a mirror surface replica to cover the surface at about a half of the area, and then the solution is spin-coated to form a layer. Multiple incident angle is measured using an automatic wavelength scanning ellipsometer (MEL-30S, a trade name, manufactured by JASCO Corp.) to obtain the value of attenuation coefficient that exhibits good convergence. The obtained value is designated as the attenuation coefficient k.

When the attenuation coefficient k is 0.3 or less, the amount of absorbed light is decreased, whereby the sensitivity is impaired to cause recording failure.

Examples of the organic substance include a phthalocyanine compound, a porphyrin-based compound, a triazole-based compound, an aminobutadiene-based compound and a cyanine-based compound, and it is preferable to use at least one kind thereof. As the phthalocyanine compound, at least one kind of alkoxy-substituted compounds, sulfonamide-substitiuted compounds, sulfamoyl-substituted compounds and sulfonic acid-substituted compounds is preferable.

The dyes described in JP-A Nos. 4-74690, 8-127174, 11-53758, 11-334204, 11-334205, 11-334206, 11-334207, 2000-43423, 2000-108513 and 2000-158818 can also be used in combination.

In addition to the foregoing dyes, organic compounds such as a triazole compound, a triazine compound, a cyanine compound, a merocyanine compound, an aminobutadiene compound, a phthalocyanine compound, a cinnamic acid compound, a viologen compound, an azo compound, an oxonolbenzoxazole compound and a benzotriazole compound can be suitably used. Among these compounds, a cyanine compound, an aminobutadiene compound, a benzotriazole compound and a phthalocyanine compound are particularly preferable.

The recording layer is formed by preparing a coating liquid by dissolving a recording material such as a dye (organic substance) together with a binder or the like in a suitable solvent, and applying the coating liquid to the light-reflective layer formed on the substrate surface to form a layer, followed by drying the layer. The concentration of the recording material in the coating liquid is normally 0.01 to 15% by mass, preferably 0.1 to 10% by mass, more preferably 0.5 to 5% by mass, and most preferably 0.5 to 3% by mass.

The recording material or the like may be dissolved in the solvent by, for example, ultrasonic treatment, homogenizer or heat.

Examples of the solvent for preparing the coating liquid for forming the recording layer include esters such as butyl acetate, ethyl lactate and cellosolve acetate; ketones such as methyl ethyl ketone, cyclohexanone and methyl isobutyl ketone; chlorinated hydrocarbons such as dichloroethane, 1,2-dichloroethane and chloroform; amides such as dimethylformamide; hydrocarbons such as methylcyclohexane; ethers such as tetrahydrofuran, ethyl ether and dioxane; alcohols such as ethanol, n-propanol, isopropanol and n-butanol diacetone alcohol; fluorine-based solvents such as 2,2,3,3-tetrafluoropropanol; glycol ethers such as ethylene glycol monomethyl ether, ethylene glycol monoethyl ether and propylene glycol monomethyl ether.

These solvents may be used singly or in combination of two or more by taking into consideration of the solubility of the recording material to be used. The coating liquid for the recording layer may also contain additives such as an antioxidant, a UV absorber, a plasticizer and a lubricant depending on the use purposes.

If a binder is used, examples of the binder include naturally occurring organic polymeric substances such as gelatin, cellulose derivatives, dextran, rosin, and rubber; and synthetic organic polymers, for example, hydrocarbon-based resins such as polyethylene, polypropylene, polystyrene and polyisobutylene; vinyl-type resins such as polyvinyl chloride, polyvinylidene chloride and vinyl chloride/vinyl acetate copolymers; acrylic resins such as polymethyl acrylate and polymethyl methacrylate; polyvinyl alcohol, chlorinated polyethylene, epoxy resins, butyral resins, rubber derivatives, and pre-condensates of heat-curable resins, e.g., phenol/formaldehyde resins. If the binder is used together with the recording material in the recording layer, the amount of the binder is generally 0.01 to 50 times (by mass ratio), and preferably 0.1 to 5 times (by mass ratio), relative to the recording material. The concentration of the recording material in the coating liquid thus prepared is generally 0.01 to 10% by mass, and preferably 0.1 to 5% by mass.

The coating liquid may be coated by spraying, spin coating, dip coating, roll coating, blade coating, doctor roll coating, or screen printing. The recording layer may comprise a single layer or multiple layers. The thickness of the recording layer is usually 20 to 500 nm, preferably 30 to 300 nm, and more preferably 50 to 100 nm.

The coating may preferably be conducted in the temperature of from 23 to 50°C, more preferably from 24 to 40°C, and most preferably from 25 to 37°C.

In order to control viscosity, the temperature at which coating is conduced is preferably 23 to 50°C, more preferably 24 to 40°C, and most preferably 25 to 37°C.

In order to prevent the disk from warping, it is preferable that a pulse-type light irradiator (preferably a UV irradiator) is used to irradiate the coating layer with ultraviolet light. The pulse interval is preferably msec or less, and more preferably µsec or less. Although the amount of light irradiated per pulse is not particularly limited, it is preferably 3 kW/cm² or less, and more preferably 2 kW/cm² or less.

Although the number of irradiation times is not particularly limited, it is preferably 20 or less, and more preferably 10 or less.

In order to raise the lightfastness of the recording layer, various kinds of anti-fading agents may be incorporated in the recording layer.

Generally, a singlet oxygen quencher is used as the anti-fading agent. Singlet oxygen quenchers already described in publications such as patent specifications can be used.

Specific examples of the singlet oxygen quencher include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, 4-25492, Japanese Patent Application Publication (JP-B) Nos. 1-38680 and 6-26028, German Patent No. 350399, and *Journal of the Chemical Society of Japan*, October 1992, p.1141.

The amount of the anti-fading agent such as the singlet oxygen quencher is usually 0.1 to 50% by mass, preferably 0.5 to 45% by mass, more preferably 3 to 40% by mass, and particularly preferably 5 to 25% by mass, relative to the amount of the compound used for recording.

### Bonding Layer

The bonding layer is an optical layer formed in order to raise adhesion between the recording layer and a cover layer described later.

A photo-curable resin is preferable as the material constituting the bonding layer. In particular, a photo-curable resin having a smaller coefficient of contraction by hardening is preferable in order to prevent warping of the disk. Examples of these photo-curable resins include UV-curable resins (UV-curable adhesives) such as SD-640 and SD-347 manufactured by Dainippon Ink & Chemicals, Inc. In order for the bonding layer to have elasticity, the thickness of the bonding layer is preferably 1 to 1000 µm, more preferably 5 to 500 µm, and most preferably 10 to 100 µm.

Examples of other materials for forming the bonding layer include resins capable of being cured with irradiation and containing at least two radiation-sensitive double bonds in the molecule. Examples thereof include acrylic esters, acrylamides, methacrylic esters, methacrylic amides, allyl compounds, vinyl ethers and vinyl esters. An acrylate compound and a methacrylate compound having bifunctionality or higher functionality are preferable.

Specific examples of the compound having bifunctionality include compounds obtained by adding acrylic acid or methacrylic acid to an aliphatic diol, such as ethylene glycol diacrylate, propylene glycol diacrylate, butanediol diacrylate, hexanediol diacrylate, diethylene glycol diacrylate, triethylene glycol diacrylate, tetraethylene glycol diacrylate, neopentyl glycol diacrylate, tripropylene glycol diacrylate, ethylene glycol dimethacrylate, propylene glycol dimethacrylate, butanediol dimethacrylate, hexanediol dimethacrylate, diethylene glycol dimethacrylate, triethylene glycol dimethacrylate, tetraethylene glycol dimethacrylate, neopentyl glycol dimethacrylate and tripropylene glycol dimethacrylate.

A polyether acrylate and a polyether methacrylate obtained by adding acrylic acid or methacrylic acid to a polyether polyol, such as polyethylene glycol, polypropylene glycol and polytetramethylene glycol, as well as a polyester acrylate and a polyester methacrylate obtained by adding acrylic acid or methacrylic acid to a polyester polyol obtained from a known dibasic acid and glycol can also be used.

Furthermore, a polyurethane acrylate and a polyurethane methacrylate obtained by adding acrylic acid or methacrylic acid to a polyurethane obtained by reacting a known polyol or diol with a polyisocyanate can also be used.

Moreover, compounds obtained by adding acrylic acid or methacrylic acid to bisphenol A, bisphenol F, hydrogenated bisphenol A, hydrogenated bisphenol F and alkylene oxide adducts thereof, and compounds having a cyclic structure, such as an isocyanuric acid alkylene oxide-modified diacrylate, an isocyanuric acid alkylene oxide-modified dimethacrylate, tricyclodecanedimethanol diacrylate and tricyclodecanedimethanol dimethacrylate can also be used.

An electron beam and an ultraviolet ray may be used as the radiation. If an ultraviolet ray is used, it is necessary to add a photo-polymerization initiator to the following compounds. An aromatic ketone is used as the photo-polymerization initiator. The aromatic ketone to be used is not particularly limited, and selected from those that exhibit a relatively large absorption coefficient at wavelengths of 254, 313 and 865 nm, at which bright light spectra of a mercury lamp generally used as an ultraviolet ray irradiation light source are formed. Representative examples thereof include acetophenone, benzophenone, benzoin ethyl ether, benzylmethylketal, benzylethylketal, benzoin isobutyl ketone, hydroxydimethyl phenyl ketone, 1-hydroxycyclohexyl phenyl ketone, 2,2-diethoxyacetophenone and a Michler's ketone. Various aromatic ketones may be used. The mixing ratio of the aromatic ketone is generally from 0.5 to 20 parts by mass, preferably from 2 to 15 parts by mass, and more preferably from 3 to 10 parts by mass, relative to 100 parts by mass of the compound (a). A UV curable adhesive containing a photo-polymerization initiator is commercially available and can be used in the invention. A mercury lamp is used as the UV light source. A lamp having 20 to 200 W/cm is used as the mercury lamp at a rate of 0.3 to 20 m/min. It is generally preferable that the distance between the substrate and the mercury lamp is from 1 to 30 cm.

As an electron beam accelerator, the accelerator equipped with a scanning system, a double-scanning system and a curtain-beam system can be employed. The electron beam accelerator equipped with a curtain-beam system is preferably used due to its large output and a relatively low cost. The electron beam accelerator generally has an accelerating voltage of from 100 to 1,000 kV, preferably from 150 to 300 kV, and an absorption dose of from 0.5 to 20 Mrad, preferably from 1 to 10 Mrad. When the accelerating voltage is less than 10 kV, the energy-penetrating amount becomes insufficient, and when it exceeds 1,000 kV, the energy efficiency used for polymerization is lowered, and thus is not preferable from the standpoint of cost.

### Cover Layer

The cover layer is formed in order to prevent water from penetrating into the interior of the optical information recording medium. The material of the cover layer is not particularly limited as long as it is transparent. The cover layer preferably comprises polycarbonate, cellulose triacetate or the like. More preferably, the material of the cover layer is a material whose coefficient of moisture absorption at 50% RH and 23°C is 5% or less.

The term "transparent" as used herein means that the material is transparent enough to allow light for recording and playback to pass through the material (transmittance: 90% or more).

The cover layer is formed by preparing a coating liquid by dissolving a photo-curable material resin for forming the bonding layer in a suitable solvent, applying the coating liquid to the recording layer at a predetermined temperature to form a coating layer, laminating a cellulose triacetate film (TAC film), which is obtained by, for example, extrusion of plastic, to the coating layer, and irradiating the resulting laminate with light from the laminated TAC film side to thereby cure the coating layer. It is preferable that the TAC film contains an ultraviolet absorber. The thickness of the cover layer is 0.01 to 0.2 mm, preferably 0.03 to 0.1 mm, and more preferably 0.05 to 0.095 mm.

While the cover layer is formed in the above-described embodiments by adhering a transparent material in the form of a film using an adhesive (adhesive layer), the cover layer may comprise only an adhesive (adhesive layer).

In the optical information recording medium of the invention, depending on the characteristics of the recording layer, a dielectric layer or a light-transmissive layer may be provided between the light-reflective layer and the recording layer. And if a phase change recording layer is used, a dielectric layer may be disposed in order to dissipate heat.

The dielectric layer is made of a material such as a nitride, an oxide, a carbide, a sulfide, etc. comprising at least one of Zn, Si, Ti, Te, Sn, Mo and Ge, and the material may have a form like ZnS-SiO₂.

Any material may be used for the light-transmissive layer as long as it has a transmittance of 90% or more at a laser wavelength.

The dielectric layer or the light-transmissive layer can be formed according to a conventionally known method. The thickness of the dielectric layer is preferably 1 to 100 nm and the thickness of the light-transmissive layer is preferably 2 to 50 nm.

### EXAMPLES

The present invention is explained in more detail by way of examples given below. It should be noted that the invention is not limited to the following examples.

### Examples 1 to 8 and Comparative Example 1

Grooved sides of spirally grooved substrates made of polycarbonate (manufactured by Teijin Ltd., trade name: Pan Light AD5503), which were obtained by injection molding and which had a thickness of 1.1 mm and a diameter of 120 mm were sputtered with Ag so that a light-reflective layer having a thickness of 120 nm was obtained. Then, each of the organic substances used in Examples and Comparative Example, shown below, was dissolved in 2,2,3,3-tetrafluoropropanol at 5% by carrying out an ultrasonic treatment for 2 hours, to thereby prepare respective dye coating liquids. Each of the dye coating liquids was spin-coated on the surface of the light-reflective layer by varying rotational frequency from 300 to 4,000 rpm at 23°C and 50% RH. The resultant products were maintained at 23°C and 50% RH for 1 hour, followed by sputtering ZnS-SiO₂ thereon to provide a layer thickness of 5 nm. Then, a UV-curable adhesive (SD-640, a trade name, produced by Dainippon Ink And Chemicals, Inc.) was spin-coated at a rotational frequency of 100 to 300 rpm, and the layer was overlaid with a polycarbonate sheet (PUREACE, a trade name, produced by Teijin Ltd., thickness: 70 µm). The adhesive was then spread over the entire surface by varying rotational frequency from 300 to 4,000 rpm. Thereafter, the adhesive was cured by irradiating ultraviolet light using an UV irradiation lamp. In this way, the samples of Examples 1 to 8 and Comparative Example 1 were produced.

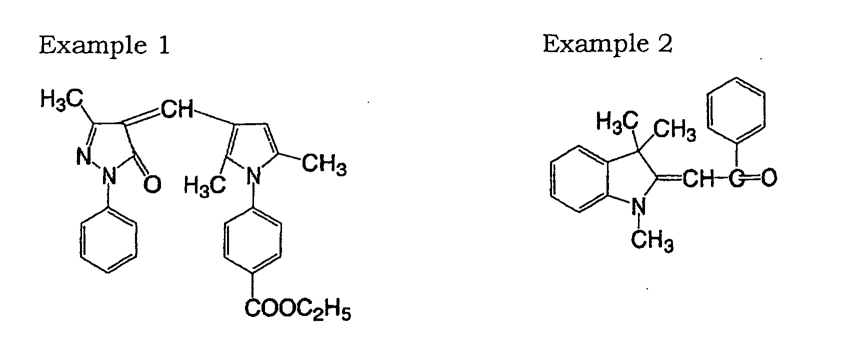

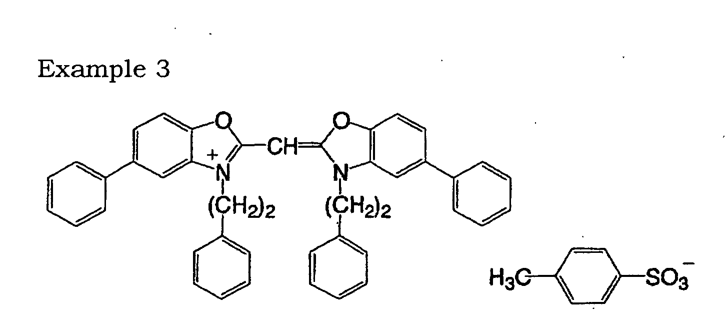

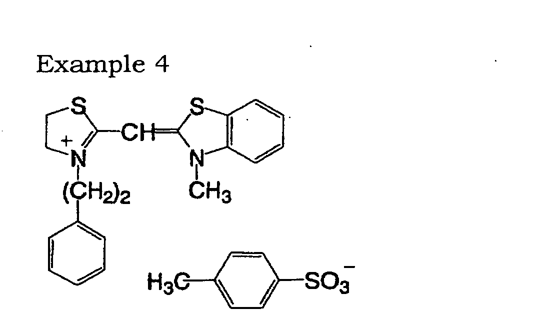

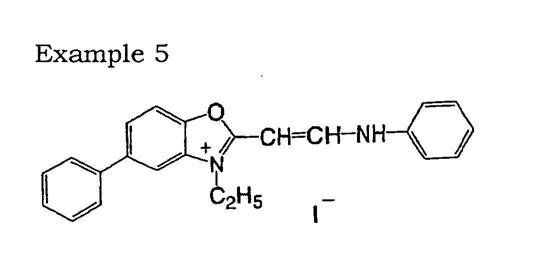

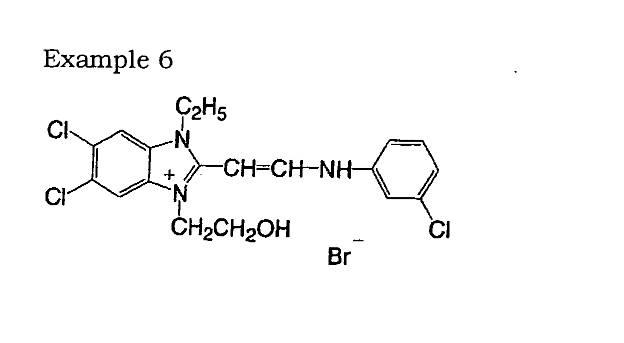

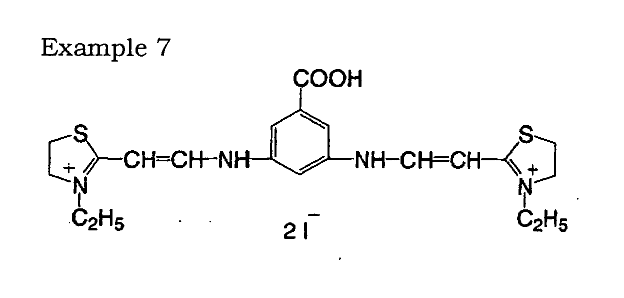

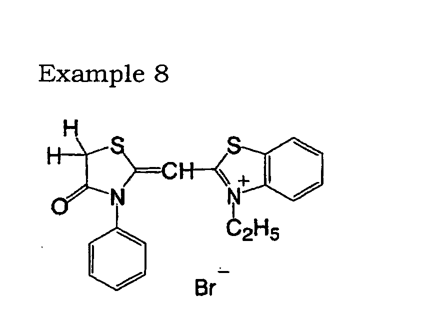

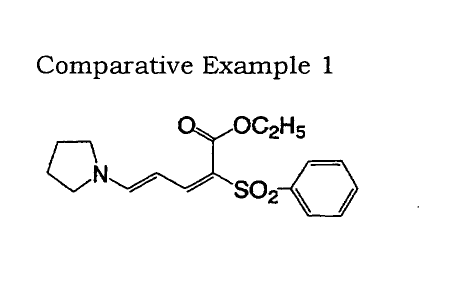

### Evaluation

By using DDU-1000 (manufactured by PULSETEC Corp.) equipped with a laser having a wavelength of 405 nm and a lens having a numerical aperture NA of 0.85, 3T signals were recorded on the optical information recording media of Examples and Comparative Example at 6 mW, and the degree of modulation thereof was evaluated. The results are shown in Table 1 below.

**TABLE 1**

| | Attenuation Coefficient k | Degree of Modulation (%) |
|---|---|---|
| Example 1 | 0.355 | 65 |
| Example 2 | 0.4335 | 70 |
| Example 3 | 0.5769 | 73 |
| Example 4 | 0.3379 | 61 |
| Example 5 | 0.7567 | 53 |
| Example 6 | 0.9898 | 45 |
| Example 7 | 0.6664 | 68 |
| Example 8 | 0.7017 | 54 |
| Comparative Example 1 | 0.26 | 12 |

As seen from Table 1, all of the optical information recording media of Examples 1 to 8 had an attenuation coefficient k of 0.3 or more and exhibited a high degree of modulation. In contrast, the optical information recording medium of Comparative Example 1 had an attenuation coefficient k of less than 0.3 and exhibited a low degree of modulation.

As described above, the present invention can provide an optical information recording medium that has a high degree of modulation and exhibits stable recording and reproducing characteristics.

## Claims

1. An optical information recording medium comprising a substrate having succesively disposed thereon a recording layer and a cover layer, wherein information is recorded and reproduced by irradiating a laser beam having a wavelength of 380 to 500 nm through a lens having a numerical aperture NA of at least 0.7 and the recording layer contains an organic substance and has an attenuation coefficient k of more than 0.3.

2. The optical information recording medium according to claim 1, wherein the attenuation coefficient k is more than 0.3 and less than 0.8.

3. The optical information recording medium according to claim 1, wherein the attenuation coefficient k is more than 0.3 and less than 0.7.

4. The optical information recording medium according to claim 1, wherein a material for the substrate is selected from the group consisting of glass, polycarbonate, amorphous polyolefin, vinyl chloride-type resins, epoxy resins, polyesters and metals.

5. The optical information recording medium according to claim 4, wherein the substrate has a thickness of 0.5 to 1.4 mm.

6. The optical information recording medium according to claim 1, wherein the substrate includes a pre-groove having a track pitch of 300 to 600 nm.

7. The optical information recording medium according to claim 1, wherein the substrate includes a pre-groove having a groove depth of 40 to 150 nm.

8. The optical information recording medium according to claim 1, further comprising a light-reflective layer containing a light-reflective material selected from the group consisting of Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi.

9. The optical information recording medium according to claim 1, wherein the light-reflective layer has a thickness of 10 to 300 nm.

10. The optical information recording medium according to claim 8, wherein an undercoat layer is provided between the substrate and the light-reflective layer.

11. The optical information recording medium according to claim 9, wherein the undercoat layer has a thickness of 0.005 to 20 µm.

12. The optical information recording medium according to claim 1, wherein the recording layer comprises an organic substance selected from the group consisting of a phthalocyanine compound, a porphyrin-based compound, a triazole-based compound, an aminobutadiene-based compound and a cyanine-based compound.

13. The optical information recording medium according to claim 12, wherein the phthalocyanine compound is at least one selected from the group consisting of an alkoxy-substituted compound, a sulfonamide-substituted compound, a sulfamoyl-substituted compound and a sulfonic acid-substituted compound.

14. The optical information recording medium according to claim 1, wherein the recording layer comprises an organic substance selected from the group consisting of a triazole compound, a triazine compound, a cyanine compound, a merocyanine compound, an aminobutadiene compound, a phthalocyanine compound, a cinnamic acid compound, a viologen compound, an azo compound, an oxonolbenzoxazole compound and a benzotriazole compound.

15. The optical information recording medium according to claim 1, wherein the recording layer has a thickness of 20 to 500 nm.

16. The optical information recording medium according to claim 1, further comprising a bonding layer between the recording layer and the cover layer.

17. The optical information recording medium according to claim 16, wherein the bonding layer has a thickness of 1 to 1,000 µm.

18. The optical information recording medium according to claim 1, wherein the recording layer further comprises an anti-fading agent.

19. The optical information recording medium according to claim 18, wherein the anti-fading agent is a singlet oxygen quencher.

20. The optical information recording medium according to claim 1, wherein the cover layer has a thickness of 0.01 to 0.2 mm.
